# EUROPEAN PATENT SPECIFICATION

(11) **EP 3 458 744 B1**
(45) Date of publication and mention of the grant of the patent: **01.04.2020**
(21) Application number: 16753713.3
(22) Date of filing: 19.05.2016
(51) Int. Cl.: F16H 21/36, F16C 29/02, F16K 31/52, F16K 31/528, F16C 29/12

(54) **DEVICE FOR A VALVE SHUTTER DISPLACEMENT**
VORRICHTUNG FÜR VENTILKLAPPENVERSCHIEBUNG
DISPOSITIF DE DÉPLACEMENT D'OBTURATEUR DE SOUPAPE

(43) Date of publication of application: 27.03.2019
(73) Proprietor: IMI STI S.r.l., 24040 Levate (BG) (IT)
(72) Inventor: TONDOLO, Flavio, 24040 Stezzano (BG) (IT); LAMOURE, Davide, 24040 Levate (BG) (IT)
(74) Representative: Bruni, Giovanni
(86) International application number: PCT/IT2016/000130
(87) International publication number: WO 2017/199268

(56) References cited:
- EP-A1- 2 666 583
- WO-A1-2009/095800
- WO-A1-2015/177752
- WO-A1-2015/181794
- DE-U1-202015 105 035

## Description

### Technical field of the invention

The present invention relates to a device which converts a linear motion in a rotary one. In particular, said device can be advantageously used for actuators with "Scotch yoke" kinematism.

### Background art

As it is known, in case of actuators for quarter turn hydraulic or pneumatic valves, the Scotch yoke kinematism is a common mechanism used for converting the linear motion in a rotary motion of a quarter turn. Therefore, the actuator with Scotch yoke kinematism allows the valve to carry out a rotation of about 90°, with a torque with the maximum value at ends, and the lowest values in the middle of the trajectory. This feature is positive for those valves which have the need of a high torque when they are in their closed position. Moreover, the actuators with Scotch yoke are normally cheap to be produced with respect to other actuators, above all when it is needed to work with high output torques. In other words, it is possible to say that the Scotch yoke kinematism is very competitive for great dimensioned valves.

An example is the document of WO2015177752 (A1) that describes a guide element, for supporting and guiding a pin of a glyph in a slot along a sliding direction.

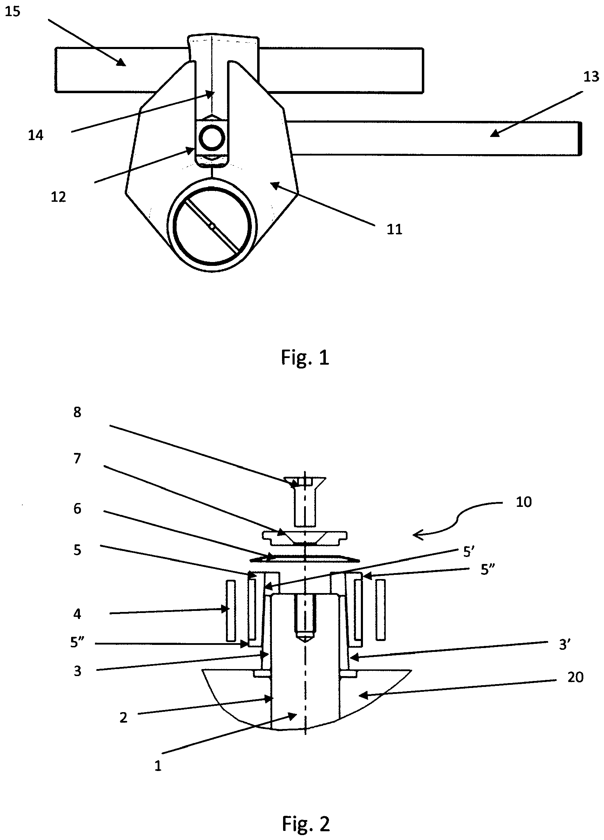

The typical design for a Scotch yoke kinematism, with reference to figure 1, which shows a Scotch yoke kinematism according to the known art, provides a stem 13 moving in reciprocating linear motion and a Scotch yoke 11 rotating on its own axis. The stem moves the Scotch yoke by means of a device, the guide block 14, which converts the linear motion of the stem 13 in a rotation of the Scotch yoke 11, with a maximum angle of about 90°. The guide block transmits the motion of the stem to the Scotch yoke by means of a pin passing through the body of the same and on which sliding pads 12 are mounted, which slide in the slot in the Scotch yoke.

A drawback of the design of actuators with Scotch yoke kinematism is linked to the fact that, during a significant portion of the 90° rotation, the force exerted by the stem is not orthogonal to the arm of the Scotch yoke(arm of Scotch yoke indicating the imaginary line joining the rotation axis of the Scotch yoke with the pin of the block, which is constrained to the stem). This causes a transverse load stress, made up of reaction forces applied orthogonally to the pressure rod and rotating shaft. Such side stresses have to be balanced so that the misalignment of the stem and/or the pin of the block is prevented.

In case of significant side forces combined with the continuous sliding of the stem in the bushings, an excessive wear of the bushings occurs up to the possible breaking of the same element. Moreover, the side forces can be transmitted through the bushings to other elements of the actuator group, which guide the stem. Finally, the friction between bushings and stem causes irregular or stepping starts and runnings of the same, thus making the use of the actuator with Scotch yoke kinematism little suitable for applications, such for example the regulation valves, which require exact and well controlled movements. A way to obviate this problem is to use a guide bar 15, auxiliary to the stem, which prevents the stem deflection by supporting transverse loads.

Actuators with Scotch yoke kinematism require that the pin of the guide block is always perfectly parallel to the rotation axis of the Scotch yoke. According to a traditional design, the Scotch yoke is made up of a central pin on which two wings are fixed, in whose slots the pads of the guide block joined to the stem slide. According to this design, the hole through the guide block is responsible for keeping the pin in the correct alignment with the rotation axis of the Scotch yoke and is helped thereto by the slots of the Scotch yoke. Therefore, it is very important that the coupling of the guide pads of the block and the slots of the Scotch yoke is almost free of any clearance which can cause irregular movements during the rotation of the Scotch yoke or the inversion of the angular motion. On the other hand, it is rather impossible to realize elements with null coupling clearances, since any mechanical working is not free of working tolerances. Moreover, in the mounting step it is required a clearance, even a minimal one, between the guide pads of the block and the slots in the slotted link. But even if, hypothetically, it were possible to realize perfect couplings with null clearance between slots and pads of the block, the motion transmission forces would generate friction between mechanical portions in movement, which could lead to wear between the guide pads of the block and the seats of the slotted link.

Therefore, there exists the need for defining a device which allows to overcome the above cited problems, which is in particular indifferent to the coupling clearances of the device, when new and during its life cycle, owing to the wear occurred.

### Summary of the invention

Therefore, the present invention is a device which converts a linear motion in a rotary one, in particular suitable for actuators with Scotch yoke kinematism, and which is provided with at least a guide pad configured so that the coupling clearances can be balanced both when it is new, and when induced by the wear which occurs during the life cycle of the actuator.

Therefore, object of the present invention is a device for converting a linear motion in a rotary one, as described in the appended independent claim.

The dependent claims describe particular and further advantageous aspects of the invention.

### Brief description of the drawings

These and other advantages of the invention will be described in detail in the following, with reference to the appended drawings, in which:
- figure 1 shows schematically an actuator with Scotch yoke kinematism according to the known art,
- figure 2 shows a two-dimensional exploded view of an embodiment of the device according to the invention,
- figure 3 shows a three-dimensional exploded view of the embodiment of the device,
- figure 4 shows an axonometric view of an assembly of the device of fig. 1,
- figure 5 shows a detail of the device of fig. 1, which shows the working principle thereof,
- figure 6 shows another detail of the device of fig. 1, which shows the transmission of the motion from the wings of the Scotch yoke.

### Detailed description

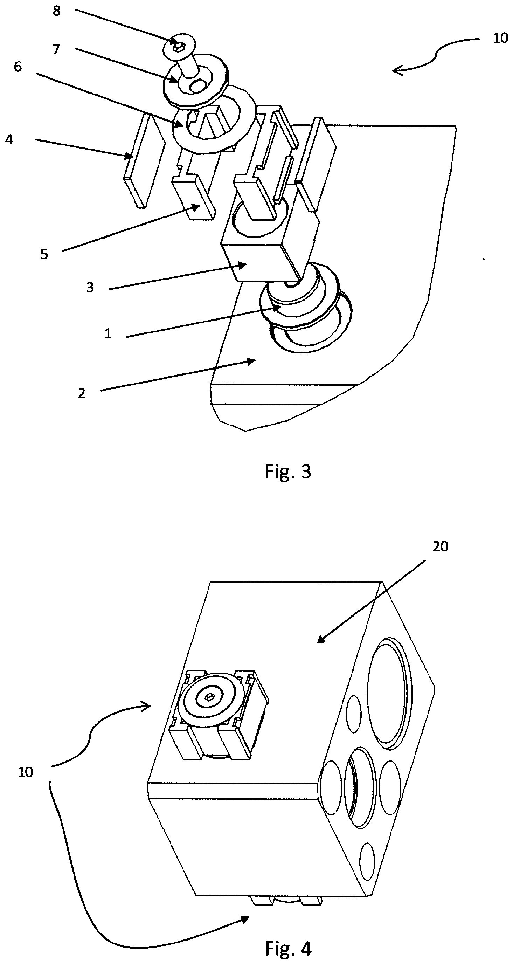

As it is shown in figures 2 to 6, object of the present invention is a device 10 which allows to eliminate all the possible mechanical clearances in the elements which transform the linear motion in rotary motion, and in particular between the guide pads and the wings of the Scotch yoke. The device according to the invention is also able to balance possible clearances due to wear occurring during the life cycle of the actuator. The elimination of the clearances allows a high mechanical resolution of positioning, and as a consequence an improvement in precision and possibility to repeat the position control. Said device allows also to eliminate casual movements of the valve connected to the actuator avoiding variations of valve positioning with consequent change of parameters of the main flow through the valve, flow rate and load losses. The device 10 is shown in exploded view in figs. 2 and 3 and in fig. 4 after mounting. The device 10 is made up of a pin 1, which can rotate in a hole of a housing 2 realized in a block 20, integral with the stem of the actuator, of known type and for this reason not shown in figure, or anyway integral to an element moving in linear motion. On the pin of the Scotch yoke, at both ends, as it is shown in fig. 4, in the areas where the pin of the Scotch yoke is coupled with the wings of the slotted link, further elements are mounted which allow, as it is explained in the following, the possible coupling clearances between pin and wings of Scotch yoke to be balanced, which are coupling clearances existing both when new, i.e. due to tolerances of piece working, and during the life cycle of the actuator, due, in such case, to wear occurred among the various elements. In particular, directly on the pin a guide block 3 is mounted, provided with an inner hole for housing the same pin. The guide block 3 is characterized by inclined side surfaces 3' which are coupled with similar inclined surfaces 5' of two guide pads 5. The outer side surfaces 3' of the guide block 3 and the inner side surfaces 5' of the guide pads 5 have the same inclination.

Advantageously, on the guide pads there are introduced two metal sheets 4 coated with self-lubricating material to lower and reduce the wear of the elements.

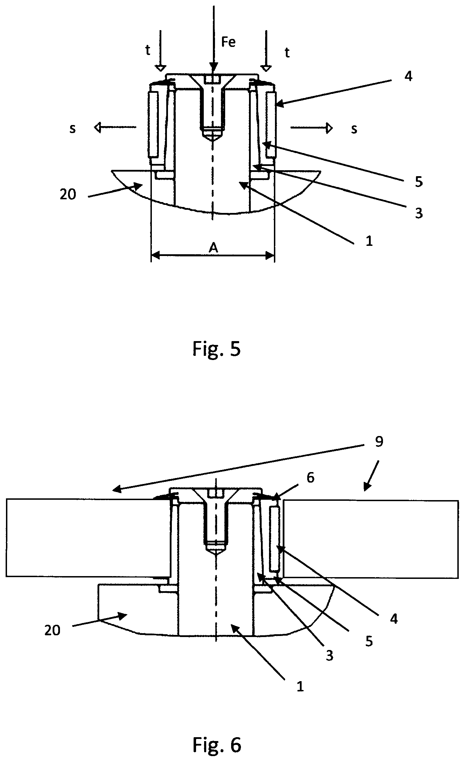

Elastic means 6, preferably a Belleville washer, generate a force on the guide pads 5 such that possible clearances are balanced between the device 10 and the wings of Scotch yoke 9, which form the seat of the device, as it is shown in fig. 6. The elastic means 6 exert its force on the guide pads 5, since it is blocked with respect to the pin of the Scotch yoke 1 by a screw 8 with suitable washer 7.

During the life cycle of the actuator possible clearances due to wear will be equally balanced by the device, thanks to the translation of the guide pads 5, i.e. the sliding of the inclined surfaces 5' of the guide pads on corresponding inclined surfaces 3' of the guide block 3. So, as a consequence the balancing of coupling clearances will cause an increasing distance A between the outer side surfaces 5" of guide pads 5, which will remain always parallel to each other, keeping the mechanical coupling without clearances with the wings of the Scotch yoke.

As it is shown in fig. 5, the irreversible motion between the inclined surfaces 5' of the guide pads 5 and the corresponding inclined surfaces of the guide block 3 due to the force Fe of the elastic means 6 allow both the vertical t and horizontal s translation of the sheets 4, eliminating all the clearances between the parts with mechanical transmission.

This embodiment of the invention is described as a way of example, clearly it is possible to eliminate the coupling clearances between guide pads of the pin of the Scotch yoke and the wings of the Scotch yoke also in the opposite manner, i.e. by reducing the distance between the surfaces of the wings of the Scotch yoke.

In addition to the embodiments, as above described, it is to be intended that there exist many other variants. Further, it is to be intended that said embodiments are only example and do not limit in any way the object of the invention and its applications or configurations. On the contrary, even if the above described description makes possible for the experts in the field to provide the present invention in at least an embodiment, it is to be intended that many variations of the elements described can be made, without departing from the object of the invention, as it is encompassed by the appended claims.

## Claims

1. Device (10) with a Scotch yoke mechanism for converting a linear motion of a first mechanical element in a rotary one of a second mechanical element, comprising:
- a pin (1), configured to realize a coupling between said first mechanical element and said second mechanical element,
- a guide block (3), provided with an inner hole configured to house the pin (1) and with inclined outer side surfaces (3');
- two guide pads (5), provided with corresponding inclined innerside surfaces (5'), which are coupled with the inclined outer side surfaces (3') of the guide block (3), and with outer side surfaces (5") configured to be coupled with corresponding wings of the Scotch yoke(9),
the device being **characterized in that**
- elastic means (6), configured to generate an elastic force (Fe) on the guide pads (5) such that the inclined inner side surfaces (5") of the guide pads (5) slide on the corresponding inclined outer side surfaces (3') of the guide block (3),
- the inclined outer side surfaces (3') of the guide block (3) and the inclined inner side surfaces (5') of the guide pads (5) have the same inclination angle,
- the distance (A) between the outer side surfaces (5") of the guide pads (5) is a function of the mutual position of the inclined inner side surfaces (5') of the guide pads (5) and the corresponding inclined outer side surfaces (3') of the guide block (3), and
- the outer side surfaces (5") of the guide pads (5) are parallel to each other.

2. Device (10) according to claim 1, **characterized in that** on the guide pads (5) two metal sheets (4) are introduced, which are coated with self-lubricating material.

3. Device (10) according to claim 1 or 2, **characterized in that** said metal sheets are configured to carry out both a vertical (t) and horizontal translation (s) which are function of the mutual position of the inclined inner side surfaces (5') of the guide pads (5) and the corresponding inclined outer side surfaces (3') of the guide block (3).

4. Device (10) according to any of the preceding claims, **characterized in that** said inclined inner side surfaces (5') of the guide pads (5) and said corresponding inclined outer side surfaces (3') of the guide block (3) are conical surfaces.

5. Device (10) according to any of the preceding claims, **characterized in that** said elastic means (6) are a Belleville washer.

6. Device (10) according to any of the preceding claims, **characterized in that** the elastic means (6) are steadily connected to the pin of the Scotch yoke (1) through removable connection means.

7. Actuator with Scotch yoke kinematism, comprising a pressure rod moving in reciprocating linear motion, a rotating shaft and **characterized by** a device (10) for converting a linear motion of a first mechanical element in a rotary motion of a second mechanical element, according to any one of the preceding claims.

## Patentansprüche

1. Vorrichtung (10) mit einem Mechanismus mit schottischem Joch, um eine lineare Bewegung eines ersten mechanischen Elements in eine Rotationsbewegung eines zweiten mechanischen Elements zu wandeln, umfassend:
- einen Stift (1), der derart konfiguriert ist, um eine Kopplung zwischen dem ersten mechanischen Element und dem zweiten mechanischen Element herzustellen;
- einen Führungsblock (3), der mit einem Innenloch zur Aufnahme des Stifts (1) und mit geneigten Flächen (3') an der Außenseite versehen ist;
- zwei Führungsschuhe (5), die an der Innenseite mit entsprechenden geneigten Flächen (5') versehen sind, die mit den geneigten Flächen (3') an der Außenseite des Führungsblocks (3) gekoppelt sind, und an der Außenseite mit seitlichen Flächen (5") mit entsprechenden Flügel des schottischen Jochs (9) gekoppelt werden,
wobei die Vorrichtung ist dadurch charakterisiert, dass
- elastische Mittel (6), die derart konfiguriert sind, dass sie eine elastische Kraft (Fe) auf die Führungsschuhe (5) derart erzeugen, dass die an der Innenseite geneigten Flächen (5") der Führungsschuhe (5) auf den entsprechenden an der Außenseite geneigten Flächen (3') des Führungsblocks (3) gleiten,
- die an der Außenseite geneigten Flächen (3') des Führungsblocks (3) und die an der Innenseite geneigten Flächen (5') der Führungsschuhe (5) den gleichen Neigungswinkel aufweisen,
- der Abstand (A) zwischen den äußeren Seitenflächen (5") der Führungsschuhe (5) eine Funktion der reziproken Position der geneigten inneren Seitenflächen (5') der Führungsschuhe (5) und der entsprechenden äußeren Seitenflächen (3') des Führungsblocks (3) und
- die äußeren Seitenflächen (5") der Führungsschuhe (5) sind parallel zueinander.

2. Vorrichtung (10) nach Anspruch 1, **dadurch gekennzeichnet, dass** zwei mit selbstschmierendem Material beschichtete Metallbleche (4) an den Führungsschuhen (5) angebracht sind.

3. Vorrichtung (10) nach Anspruch 1 oder 2, **dadurch gekennzeichnet, dass** die Metallbleche derart konfiguriert sind, dass sie sowohl eine vertikale Verschiebung (t) als auch eine horizontale Verschiebung (s) gemäß der reziproken Position der geneigten inneren Seitenflächen (5') der Führungsschuhe (5) und der entsprechenden geneigten äußeren Seitenflächen (3') des Führungsblocks (3) durchführen.

4. Vorrichtung (10) nach einem der vorhergehenden Ansprüche, **dadurch gekennzeichnet, dass** die geneigten inneren Seitenflächen (5') der Führungsschuhe (5) und die entsprechenden geneigten äußeren Seitenflächen (3') des Führungsblocks (3) konische Oberflächen aufweisen.

5. Vorrichtung (10) nach einem der vorhergehenden Ansprüche, **dadurch gekennzeichnet , dass** die elastischen Mittel (6) eine Belleville-Scheibe umfassen.

6. Vorrichtung (10) nach einem der vorhergehenden Ansprüche, **dadurch gekennzeichnet, dass** die elastischen Mittel (6) dauerhaft mit dem Stift des schottischen Jochs (1) durch abnehmbare Verbindungsmittel verbunden sind.

7. Aktuator mit einem kinematischem Mechanismus eines schottischen Jochs, umfassend einen Druckstab, der gemäß einer linearen Hin- und Her-Bewegung beweglich ist, eine rotierende Welle, und **gekennzeichnet durch** eine Vorrichtung (10) zum Umwandeln einer linearen Bewegung eines ersten mechanischen Elements in eine lineare Bewegung eines zweiten mechanisches Element, gemäß einem der vorhergehenden Ansprüche.

## Revendications

1. Dispositif avec mécanisme à joug écossais pour convertir un mouvement linéaire d'un premier élément mécanique en un mouvement de rotation d'un deuxième élément mécanique, comprenant:
- une broche (1) configurée pour réaliser un couplage entre ledit premier élément mécanique et ledit deuxième élément mécanique,
- un bloc de guidage (3) pourvu d'un trou interne configuré pour loger la broche (1) et de surfaces inclinées (3') sur le côté externe;
- deux patins de guidage (5) pourvus de surfaces inclinées correspondantes (5') sur le côté interne, couplées aux surfaces inclinées (3') sur le côté externe du bloc de guidage (3), et avec des surfaces latérales externes (5") configurées à coupler avec les ailes correspondants du joug écossais (9),
le dispositif étant **caractérisé en ce que**
- des moyens élastiques (6) sont configurés pour générer une force élastique (Fe) sur les patins de guidage (5) de telle sorte que les surfaces latérales inclinées internes (5") des patins de guidage (5) coulissent sur les surfaces latérales externes correspondantes inclinées (3') du bloc de guidage (3),
- les surfaces latérales externes inclinées (3') du bloc de guidage (3) et les surfaces latérales internes inclinées (5') des patins de guidage (5) ont le même angle d'inclinaison,
- la distance (A) entre les surfaces latérales externes (5") des patins de guidage (5) est fonction de la position mutuelle des surfaces latérales internes inclinées (5') des patins de guidage (5), et des surfaces latérales externes correspondantes inclinées (3') du bloc de guidage (3), et
- les surfaces latérales externes (5") des patins de guidage (5) sont parallèles entre elles.

2. Dispositif (10) selon la revendication 1, **caractérisé en ce que** deux tôles métalliques (4) enduites avec un matériau autolubrifiant, sont introduites sur les patins de guidage (5).

3. Dispositif (10) selon la revendication 1 ou 2, **caractérisé en ce que** lesdites tôles métalliques sont configurées pour effectuer à la fois une translation verticale (t) et également une translation horizontale (s), selon la position réciproque des surfaces latérales internes inclinées (5') des patins de guidage (5) et des surfaces latérales externes inclinées correspondantes (3') du bloc de guidage (3).

4. Dispositif (10) selon l'une des précédentes revendications, **caractérisé en ce que** lesdites surfaces latérales internes inclinées (5') des patins de guidage (5) et lesdites surfaces latérales externes inclinées correspondantes (3') du bloc de guidage (3) sont des surfaces coniques.

5. Dispositif (10) selon l'une des précédentes revendications, **caractérisé en ce que** lesdits moyens élastiques (6) sont formés par une rondelle Belleville.

6. Dispositif (10) selon l'une des précédentes revendications, **caractérisé en ce que** les moyens élastiques (6) sont reliés de façon permanente à la broche du joug écossais (1) par l'intermédiaire de des moyens de connexion amovibles.

7. Actionneur à mécanisme cinématique à joug écossais, comprenant une tige de pression mobile selon un mouvement alternatif linéaire, un arbre rotatif et **caractérisé par** un dispositif (10) pour convertir un mouvement linéaire d'un premier élément mécanique en un mouvement rotatif d'un deuxième élément mécanique, selon l'une des revendications précédentes.
